# EUROPÄISCHE PATENTSCHRIFT

(11) **EP 3 521 682 B1**
(45) Veröffentlichungstag und Bekanntmachung des Hinweises auf die Patenterteilung: **27.10.2021**
(21) Anmeldenummer: 18155039.3
(22) Anmeldetag: 05.02.2018
(51) Int. Cl.: F16P 3/08, E05B 65/00, H01H 9/00, E05C 1/00, H01H 27/00

(54) **SICHERHEITSSCHALTER**
SAFETY SWITCH
COMMUTATEUR DE SÉCURITÉ

(43) Veröffentlichungstag der Anmeldung: 07.08.2019
(73) Patentinhaber: EUCHNER GmbH + Co. KG, 70771 Leinfelden-Echterdingen (DE)
(72) Erfinder: Grimm, Ilo, 71111 Waldenbuch (DE)
(74) Vertreter: Ruckh, Rainer Gerhard

(56) Entgegenhaltungen:
- WO-A1-2016/058718
- DE-A1-102012 111 342

## Beschreibung

Die Erfindung betrifft einen Sicherheitsschalter.

Bekannte Sicherheitsschalter bilden zusammen mit einem Betätiger eine Sicherheitsschalteranordnung, die im Bereich der Sicherheitstechnik eingesetzt wird. Für den Einsatz im Bereich der Sicherheitstechnik, insbesondere im Bereich des Personenschutzes ist es erforderlich, dass die Sicherheitsschalteranordnung normative Anforderungen hinsichtlich deren Fehlersicherheit aufweist, so dass gewährleistet ist, dass mit der Sicherheitsschalteranordnung eine entsprechend sichere Überwachungsfunktion durchgeführt werden kann. Eine derartige Sicherheitsschalteranordnung kann typischerweise zur Sicherung des Zugangs zu einem Gefahrenbereich eingesetzt werden. Beispielsweise kann mit einer Sicherheitsschalteranordnung eine Verriegelung einer trennenden Schutzeinrichtung wie einer Schutztür als Zugang zu einem Gefahrenbereich, abgesichert werden. In diesem Fall wird beispielsweise der Betrieb einer gefahrbringenden Anlage innerhalb des Gefahrenbereichs nur dann freigegeben, wenn mit der Sicherheitsschalteranordnung die Schutztür verriegelt ist. Die Freigabe der Anlage kann über eine Sicherheitssteuerung erfolgen, welcher sicherheitsrelevante Schaltsignale der Sicherheitsschalteranordnung zugeführt sind.

Zur Verriegelung der Schutztür wird, wenn sich die Schutztür in ihrer Schließstellung und Verriegelungsposition befindet, der Betätiger in Form eines Riegels oder dergleichen in Eingriff mit dem Sicherheitsschalter gebracht, indem beispielsweise der Betätiger in eine Aussparung des Sicherheitsschalters eingefahren wird. Diese Verriegelung wird dadurch kontrolliert, dass mit einem RFID-Lesegerät im Sicherheitsschalter ein Transponder im Betätiger erkannt wird.

Zusätzlich zu dieser Verriegelung kann eine Zuhaltung der Schutztür vorgesehen sein. Eine derartige Zuhaltung ist beispielsweise aus der WO 2016/058718 A1 bekannt. Bei dieser Zuhaltung ist ein Zuhaltebolzen vorgesehen, der mittels eines Elektromotors mit einem Planetengetriebe betätigt wird. Mit dem elektrischen Antrieb kann der Zuhaltebolzen in eine Sperrstellung verfahren werden, in der der Betätiger mit dem Zuhaltebolzen zugehalten wird.

Die DE 10 2012 111 342 A1 betrifft ein Schutztürüberwachungssystem mit einer Schutztür als Zugang zu einem Sicherheitsbereich und mit einem Schutztürüberwachungsmodul zur Überwachung eines Zustands der Schutztür. Das Schutztürüberwachungsmodul weist einen Betätiger und einen Sensor auf, welche elektrisch kontaktlos in Wechselwirkung nacheinander bringbar sind und dadurch ein Schutztürsignal erzeugen. Des Weiteren weist das Schutztürüberwachungssystem eine Steuerungseinheit auf, welche dazu eingerichtet ist, das Schutztürsignal auszulesen und eine im Sicherheitsbereich befindliche Maschine oder Anlage in Abhängigkeit des Schutztürsignals zu steuern. Zudem ist eine Verriegelungseinrichtung mit einem Grundkörper und einem daran angeordneten Verriegelungshebel vorgesehen. Der Verriegelungshebel ist gegenüber dem Grundkörper aus einer Freigabestellung in eine Sperrstellung bringbar, in welcher der Verriegelungshebel die elektrisch kontaktlose Wechselwirkung zwischen dem Betätiger und dem Sensor verhindert, wobei die Verriegelungseinrichtung eine Aufnahme für ein abschließbares Sicherungsteil aufweist, welches, in die Aufnahme eingeführt, den Verriegelungshebel in seiner Sperrstellung hält.

Der Erfindung liegt die Aufgabe zugrunde, einen Sicherheitsschalter bereitzustellen, der bei geringem konstruktivem Aufwand eine zuverlässige Sicherungsfunktion ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen betätigerlos arbeitenden Sicherheitsschalter für eine trennende Schutzeinrichtung mit Mitteln zur Kontrolle einer Verriegelungsposition einer Komponente der trennenden Schutzeinrichtung und mit einer Zuhalteeinheit. Die Zuhalteeinheit weist ein Zuhalteelement auf, welches in eine Zuhalteposition einbringbar ist. Diese Zuhalteposition bewirkt eine Zuhaltung einer beweglichen Komponente der trennenden Schutzeinrichtung, wobei der Sicherheitsschalter einen Gewindetrieb mit einem Motor und einer Gewindespindel aufweist, mittels dessen das Zuhalteelement zwischen einer Zuhalteposition und einer Freigabeposition verfahrbar ist. Der Gewindetrieb ist über eine Kulisse mit dem Zuhalteelement verbunden, wobei durch die Kulisse die Bewegung der Gewindespindel in eine Linearbewegung des Zuhalteelements umgesetzt ist.

Ein wesentlicher Vorteil des erfindungsgemäßen Sicherheitsschalters besteht darin, dass dieser betätigerlos arbeitet, das heißt es muss kein Betätiger als zusätzliche mechanische Einheit vorgesehen sein, damit der Sicherheitsschalter seine Sicherheitsfunktion ausüben kann. Der Sicherheitsschalter weist dabei generell einen fehlersicheren Aufbau auf, so dass dieser die normativen Anforderungen für den Einsatz im Bereich der Sicherheitstechnik erfüllt.

Der erfindungsgemäße Sicherheitsschalter kann somit die Verriegelungsposition einer Komponente einer trennenden Schutzeinrichtung direkt kontrollieren, ohne dass an dieser ein Betätiger vorgesehen sein muss, der mit dem Sicherheitsschalter zur Definition und Kontrolle der Verriegelungsposition in Eingriff gebracht werden müsste.

Dadurch wird der bauliche Aufwand zur Absicherung der trennenden Schutzeinrichtung erheblich reduziert.

Ein weiterer wesentlicher Aspekt der Erfindung besteht darin, dass der Sicherheitsschalter selbst ein Zuhalteelement aufweist, mit welchem eine sichere Zuhaltung einer beweglichen Komponente der trennenden Schutzeinrichtung, beispielsweise einer Tür bewirkt wird. Die Tür kann als Schiebetür, Schwingtür, Klappe oder dergleichen ausgebildet sein. Damit wird mit dem Sicherheitsschalter nicht nur eine Verriegelungsposition einer beweglichen Komponente der trennenden Schutzeinrichtung kontrolliert, sondern auch eine Zuhaltung, und damit eine mechanische Sicherung bewirkt, die ein unbefugtes Bewegen der Komponente der trennenden Schutzeinrichtung verhindert. Damit kann mit dem Sicherheitsschalter als alleiniger Sicherheitskomponente der Zugang zu einem Gefahrenbereich abgesichert werden.

Erfindungsgemäß weist der Sicherheitsschalter einen Gewindetrieb mit einem Motor und einer Gewindespindel auf, mittels dessen das Zuhalteelement zwischen einer Zuhalteposition und einer Freigabeposition verfahrbar ist.

Während das Zuhalteelement in der Zuhalteposition die Zuhaltung der beweglichen Komponente der trennenden Schutzeinrichtung, insbesondere einer Tür, bewirkt, ist bei dem in die Freigabeposition eingebrachten Zuhalteelement die Komponente der trennenden Schutzeinrichtung bewegbar. Beispielsweise kann dann eine Komponente in Form einer Tür eine Öffnungsbewegung durchführen, um so den Zugang zu einem Gefahrenbereich zu ermöglichen.

Mit dem Gewindetrieb wird eine zuverlässige und reproduzierbare Überführung des Zuhalteelements von der Zuhalteposition in die Freigabeposition und umgekehrt ermöglicht. Dabei weist der Gewindetrieb bestehend aus einem Motor, insbesondere einem Elektromotor, und einer Gewindespindel einen kompakten und robusten Aufbau auf.

Erfindungsgemäß ist der Gewindetrieb über eine Kulisse mit dem Zuhalteelement verbunden. Durch die Kulisse ist die Bewegung der Gewindespindel in eine Linearbewegung des Zuhalteelements umgesetzt.

Mit der Kulisse kann auf einfache Weise die Drehbewegung des Motors und der Gewindespindel in die gewünschte Linearbewegung des vorteilhaft in Form einer Klinke ausgebildeten Zuhalteelements umgesetzt werden. Die Geometrie des Zuhalteelements, insbesondere der Klinke und deren durch die Kulisse vorgegebene Bewegung sind so abgestimmt, dass mit dem Zuhalteelement in der Zuhalteposition die bewegliche Komponente der trennenden Schutzeinrichtung gegen Bewegungen vollkommen gesichert ist und dass in der Freigabeposition des Zuhalteelements die Bewegung der beweglichen Komponente vollständig freigegeben ist, was insbesondere dadurch erreicht wird, dass in der Freigabeposition das Zuhalteelement vollständig in den Sicherheitsschalter eingefahren ist.

Besonders vorteilhaft führt der Motor nur in einer Drehrichtung eine Drehbewegung aus. Zudem weist die Gewindespindel nur eine Flanke über eine Umdrehung von maximal 360° auf. Diese Flanke gibt der Gewindespindel den Verfahrweg des Zuhalteelements von der Zuhalteposition in Freigabeposition vor. Bei Drehen der Gewindespindel über einen die Flanke begrenzenden Scheitelpunkt hinaus ist das Zuhalteelement von der Freigabeposition in die Zuhalteposition überführt. Dabei ist mittels der Gewindespindel die Kulisse gegen die Federkraft einer Federeinheit bewegbar.

Da sich der Motor sowohl für die Verriegelung, das heißt für die Überführung des Zuhalteelements von der Freigabeposition in die Zuhalteposition, als auch für die Entriegelung, das heißt die Überführung des Zuhalteelements von der Zuhalteposition in die Freigabeposition, immer in einer Drehrichtung dreht, ergibt sich eine besonders einfache Ansteuerung des Motors.

Durch Ausnützen der Sprungfunktion des Gewindetriebs ergibt sich eine asymmetrische Entriegelung und Verriegelung des Zuhalteelements. Bei der Entriegelung wird die Gewindespindel mit der Flanke an der Kulisse geführt, wodurch die notwendige Kraft bereitgestellt wird, um ein Entriegeln unter Last zu ermöglichen, da bei der Entriegelung das Zuhalteelement kraftbeaufschlagt in Eingriff mit der zugeordneten Komponente der trennenden Schutzeinrichtung ist. Dagegen erfolgt eine Verriegelung durch Drehen der Gewindespindel über ihren Scheitelpunkt hinweg, so dass dann das Zuhalteelement abrupt in die Zuhalteposition überführt wird. Hierzu ist kein großer Kraftaufwand erforderlich, da das Zuhalteelement noch nicht in Eingriff mit der zugeordneten Komponente der trennenden Schutzeinrichtung ist.

Gemäß einer vorteilhaften Ausgestaltung der Erfindung ist als Mittel zur Kontrolle der Verriegelungsposition der beweglichen Komponente der trennenden Schutzeinrichtung eine RFID-Leseeinheit vorgesehen.

Die Funktionalität des Sicherheitsschalters kann dadurch noch erhöht werden, dass diese Mittel zur Positionserfassung der beweglichen Komponente der trennenden Schutzeinrichtung aufweist.

Diese umfassen eine weitere RFID-Leseeinheit mit einer vorteilhaft ortsfest im Sicherheitsschalter angeordneten Lesespule, die mit einem Transponder zusammenwirkt, der in einer relativ zum Sicherheitsschalter beweglichen Komponente der trennenden Schutzeinrichtung integriert ist.

Dabei weist vorteilhaft die oder jede RFID-Leseeinheit eine im Zuhalteelement integrierte Lesespule auf.

Die Kontrolle der Zuhalteposition der beweglichen Komponente der trennenden Schutzeinrichtung kann somit berührungslos erfolgen. Hierzu ist in einer relativ zum Sicherheitsschalter beweglichen Komponente der trennenden Schutzeinrichtung ein Transponder vorgesehen. Befindet sich die bewegliche Komponente der trennenden Schutzeinrichtung in der Zuhalteposition, liegt der Transponder im Einflussbereich der Lesespule, so dass mit dieser kodierte Signale des Transponders erfasst werden können. Dadurch kann die Zuhalteposition sicher und genau bestimmt werden.

Durch diese Türstellungserkennung kann die Tür vollständig auf Verriegelung und Zuhaltung überwacht und kontrolliert werden.

Die bewegliche Komponente der trennenden Schutzeinrichtung ist vorteilhaft von einer Tür gebildet, mit welcher je nach Türstellung der Zugang zu einem Bereich versperrt oder freigegeben werden kann. Insbesondere ist die Tür als Schutztür ausgebildet, die den Zugang zu einem Gefahrenbereich versperren kann.

Gemäß einer ersten Variante der Erfindung kann der Sicherheitsschalter in der Tür integriert sein. In diesem Fall kann dann, wenn sich die Tür in der Verriegelungsposition befindet, das Zuhalteelement in die Zuhalteposition ausgefahren werden und beispielsweise in eine Ausnehmung des Türrahmens eingeführt werden um die Tür zu zu halten.

Gemäß einer zweiten Variante der Erfindung kann der Sicherheitsschalter stationär in einem der beweglichen Tür zugeordneten Türrahmen integriert sein. In diesem Fall erfolgt eine sicherere Zuhaltung der Tür in ihrer Verriegelungsposition, indem das Zuhalteelement in die Zuhalteposition ausgefahren und dann in Eingriff mit der Tür gebracht wird.

Insbesondere bei letzterer Variante kann der Sicherheitsschalter in einem Profil untergebracht sein. Dabei kann das Profil Bestandteil des Türrahmens sein, so dass der Sicherheitsschalter platzsparend in bereits vorhandenen Komponenten des Türrahmens untergebracht werden kann.

Vorteilhaft ist dabei auch ein an dem Sicherheitsschalter angeschlossenes Kabel im Profil geführt, so dass keine externen Kabelführungen vorgesehen werden müssen.

Der Sicherheitsschalter ist im Profil gegen Verschmutzungen weitgehend geschützt. Zudem ist der Sicherheitsschalter im Profil gegen Manipulationen geschützt.

Die Erfindung wird im Folgenden anhand der Zeichnung erläutert. Es zeigen:
- Figur 1:: Ausführungsform des erfindungsgemäßen Sicherheitsschalters mit einem zugeordneten Profil.
- Figur 2:: Sicherheitsschalter gemäß Figur 1 in seiner Einbauposition im Profil.
- Figur 3:: Sicherheitsschalter gemäß Figuren 1 und 2 mit einer zugeordneten Tür in ihrer Zuhalte- und Verriegelungsposition.
- Figur 4:: Darstellung des Sicherheitsschalters gemäß den Figuren 1 bis 3 bei geöffnetem Gehäuse.
- Figur 5:: Anordnung gemäß Figur 4 ohne Gehäusewand.
- Figur 6:: Einzeldarstellung einer Gewindespindel für den Gewindetrieb des Sicherheitsschalters gemäß den Figuren 1 bis 5.

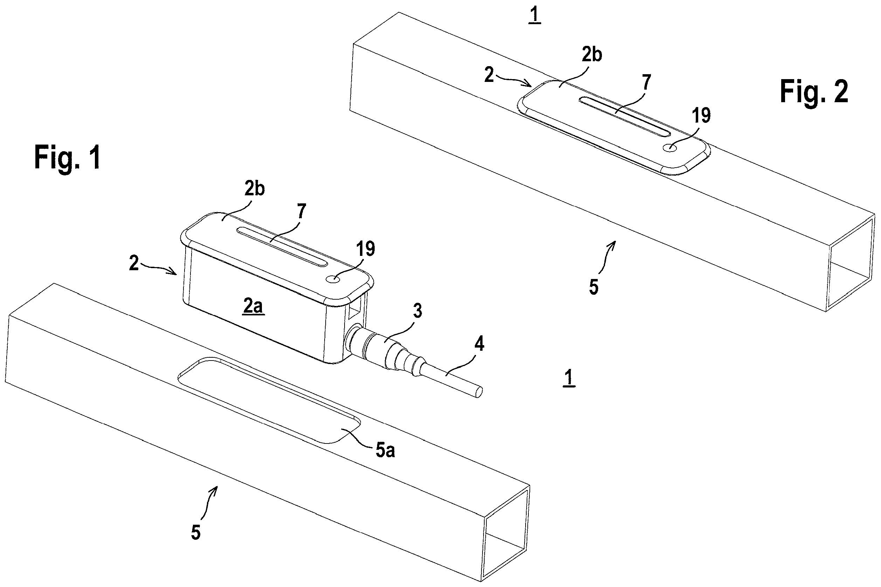

Die Figuren 1 bis 5 zeigen ein Ausführungsbeispiel des erfindungsgemäßen Sicherheitsschalters 1. Der Sicherheitsschalter 1 ist in einem Gehäuse 2 integriert, welches einen Gehäusegrundkörper 2a und einen Gehäusedeckel 2b aufweist.

Am Gehäusegrundkörper 2a ist ein Kabelanschluss 3 zum Anschluss eines Kabels 4 vorgesehen.

Die Form des Gehäuses 2 des Sicherheitsschalters 1 ist so gewählt, dass der Sicherheitsschalter 1 in einem Profil 5 eingebaut werden kann, welches bevorzugt Bestandteil eines Türrahmens ist.

Wie die Figuren 1 und 2 zeigen, kann der Sicherheitsschalter 1 so in eine Öffnung 5a des Profils 5 eingesetzt werden, dass nur der Gehäusedeckel 2b am Profil 5 frei liegt, alle anderen Komponenten des Sicherheitsschalters 1 jedoch im Profil 5 angeordnet sind und so gegen Verschmutzungen und Manipulationen geschützt sind.

Vorteilhaft besteht der im Profil 5 freitragende Gehäusedeckel 2b aus verschmutzungsresistentem Material wie zum Beispiel Edelstahl. Der Gehäusegrundkörper 2a kann dagegen aus einem kostengünstigeren Kunststoff bestehen.

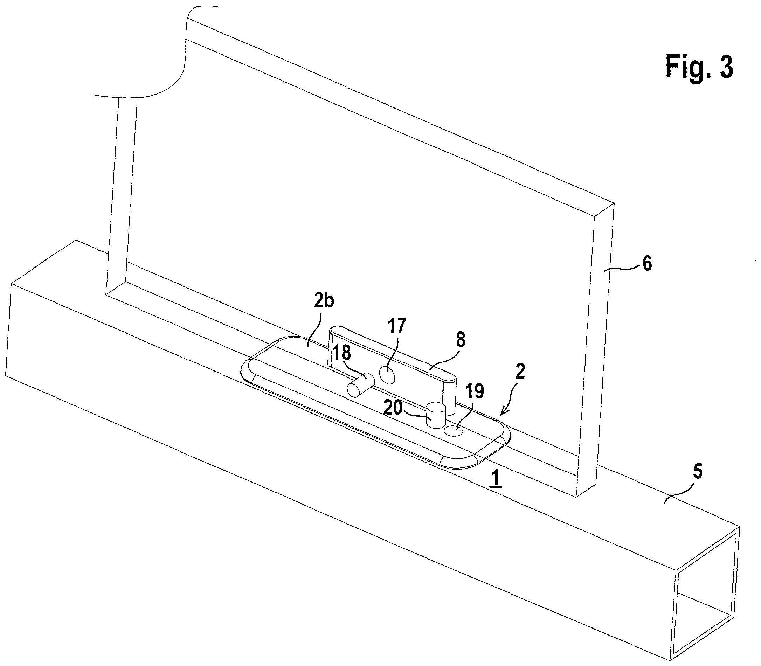

Der Sicherheitsschalter 1 wird im Bereich der Sicherheitstechnik eingesetzt, insbesondere zur Gefahrenbereichsüberwachung. Im vorliegenden Fall wird mit dem Sicherheitsschalter 1 die Verriegelungsposition einer Tür 6 kontrolliert und überwacht, die in ihrer Verriegelungsposition den Zugang zu dem Gefahrenbereich versperrt. Figur 3 zeigt die Tür 6 in ihrer Verriegelungsposition relativ zu dem im Profil 5 integrierten Sicherheitsschalter 1.

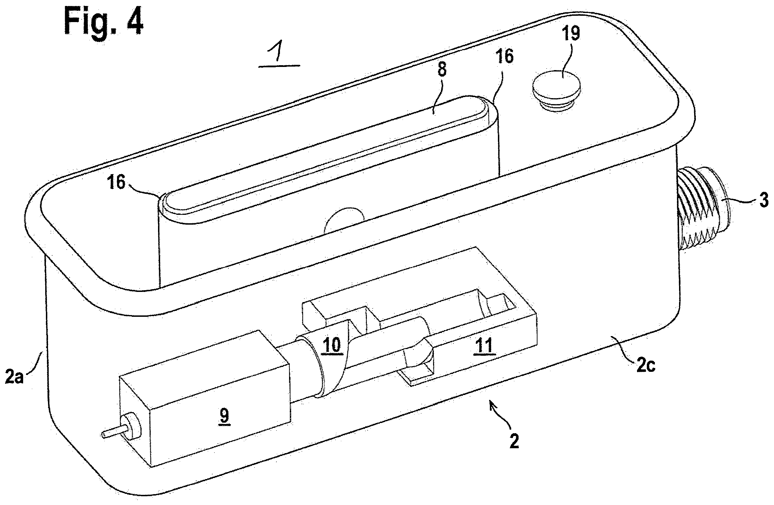

Im Gehäusedeckel 2b des Sicherheitsschalters 1 ist ein Spalt 7 eingearbeitet. Über diesen Spalt 7 kann ein Zuhalteelement in Form einer Klinke 8 ausgefahren werden. Figur 3 zeigt die in eine Zuhalteposition ausgefahrene Klinke 8. Zusammen mit einem nicht dargestellten Anschlag am Profil 5 hält die Klinke 8 die schwenkbar gelagerte Tür 6 in ihrer Verriegelungsposition, das heißt die Klinke 8 bewirkt eine sichere Zuhaltung der Tür 6. Weiterhin kann die Klinke 8 in eine Freigabeposition eingefahren werden, in welcher die Schwenkbewegung der Tür 6 freigegeben ist. Zum Verfahren der Klinke 8 zwischen der Zuhalteposition, in welcher diese über den Gehäusedeckel 2b nach außen hervorsteht (Figur 3), und der Freigabeposition, in welcher die Klinke 8 in den Sicherheitsschalter 1 eingefahren ist (Figur 4), ist ein Gewindetrieb mit einem Elektromotor 9 und einer Gewindespindel 10 vorgesehen.

Die Gewindespindel 10 ist in Eingriff mit einer Kulisse 11, die gegen die Federkraft eines Federelements 12 bewegt werden kann. Wie aus den Figuren 3 und 4 ersichtlich, sind der Elektromotor 9 und die Kulisse 11 auf dem Boden 2c des Gehäusegrundkörpers 2a gelagert. Das von einer einzelnen Feder gebildete Federelement 12 ist zwischen der dem Gewindetrieb abgewandten Stirnseite der Kulisse 11 und einem vom Boden 2c senkrecht hervorstehenden, den Kabelanschluss 3 tragenden Wandsegment 13 gelagert.

Die Kulisse 11 umfasst weiterhin einen Bolzen 14, der in einem Langloch 15 der Klinke 8 geführt ist. Die Klinke 8 ihrerseits ist in Führungen 16 des Gehäusegrundkörpers 2a gelagert, so dass diese nur in vertikaler Richtung bewegbar ist.

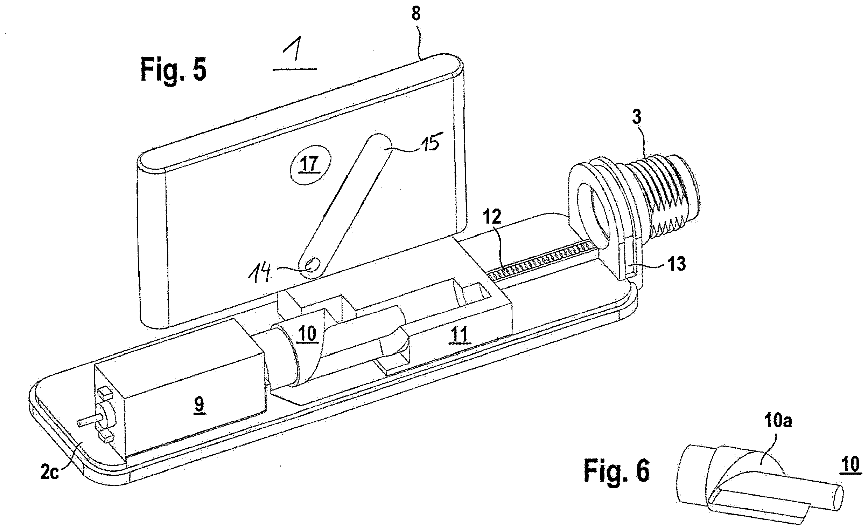

Der Gewindetrieb weist eine Sprungfunktion auf. Hierzu weist die Gewindespindel 10 nur eine Flanke 10a auf, mit der der gesamte Fahrweg der Klinke 8 zwischen der Zuhalteposition und Freigabeposition vorgegeben wird (Figur 6).

Der Elektromotor 9 wird über eine nicht dargestellte Steuereinheit nur in einer Drehrichtung betrieben. Zum Verfahren der Klinke 8 von der Verriegelungsposition in die Freigabeposition wird die Flanke 10a an der Kulisse 11 bewegt, wodurch der Bolzen 14 im Langloch 15 geführt wird und die Klinke 8 in die Freigabeposition überführt wird. Da hierbei eine stetige Kraftbeaufschlagung vom Gewindetrieb zur Kulisse 11 und damit zur Klinke 8 gegeben ist, ist dadurch ein Entriegeln der Tür 6 unter Last möglich.

Wird die Gewindespindel 10 über den Elektromotor 9 weiter über ihren Scheitelpunkt hinaus gedreht, wird die Klinke 8 schlagartig von der Freigabeposition in die Zuhalteposition überführt.

Die Funktionalität des Sicherheitsschalters 1 ist dadurch erweitert, dass dieser eine zweite RFID-Leseeinheit mit einer weiteren Lesespule 19 aufweist, welche stationär im Gehäuse 2 des Sicherheitsschalters 1 angeordnet ist. Mit dieser Lesespule 19 können Transpondersignale eines weiteren Transponders 20 erfasst werden, der im unteren Randbereich der Tür 6 eingearbeitet ist. Mit dieser weiteren RFID-Leseeinheit wird die Türstellung der Tür 6 erfasst beziehungsweise kontrolliert.

Zur Kontrolle der Zuhalteposition ist eine erste RFID-Leseeinheit vorgesehen, welche eine in der Klinke 8 angeordnete Lesespule 17 aufweist. Dieser RFID-Leseeinheit ist ein erster Transponder 18 zugeordnet, der in Form eines Transponderdübels in die Wand der Tür 6 eingearbeitet ist.

Nur wenn sich die Tür 6 in ihrer Verriegelungsposition und die Klinke 8 in ihrer Zuhalteposition befinden, liegt der Transponder 18 in geringem Abstand gegenüber zur Lesespule 17, das heißt nur dann befindet sich der Transponder 18 im Einflussbereich der Lesespule 17, so dass mit der Lesespule 17 kodierte Signale des Transponders 18 erfasst werden können.

Die Sicherheitsfunktion der Gewindespindel 10 ist derart, dass dieser ein Freigabesignal, beispielsweise für die Freigabe einer Maschine im überwachten Gefahrenbereich, nur dann generiert, wenn mit der RFID-Leseeinheit die Tür 6 in der Verriegelungsposition erkannt wird und mit der Klinke 8 die Zuhaltung der Tür 6 bewirkt ist..

### Bezugszeichenliste

- (1): Sicherheitsschalter
- (2): Gehäuse
- (2a): Gehäusegrundkörper
- (2b): Gehäusedeckel
- (2c): Boden
- (3): Kabelanschluss
- (4): Kabel
- (5): Profil
- (5a): Öffnung
- (6): Tür
- (7): Spalt
- (8): Klinke
- (9): Elektromotor
- (10): Gewindespindel
- (10a): Flanke
- (11): Kulisse
- (12): Federelement
- (13): Wandsegment
- (14): Bolzen
- (15): Langloch
- (16): Führungen
- (17): Lesespule
- (18): Transponder
- (19): weitere Lesespule
- (20): weiterer Transponder

## Patentansprüche

1. Safety switch (1) for a separating protective device, **characterised in that** this operates without actuator and comprises means for checking a locking position of a component of the separating protective device as well as a retaining unit with a retaining element, which can be brought into a retaining position in which this produces retention of a movable component of the separating protective device, wherein the safety switch comprises a screw drive, with a motor and a threaded spindle (10), by means of which the retaining element is movable between a retaining position and a release position, and wherein the screw drive is connected with the retaining element by way of a link (11), wherein the movement of the threaded spindle (10) is converted into a linear movement of the retaining element by the link (11).

2. Safety switch (1) according to claim 1, **characterised in that** the motor executes a rotational movement in only one rotational direction and that the threaded spindle (10) has only one flank (10a), wherein the flank (10a) of the threaded spindle (10) predetermines the travel path of the retaining element from the retaining position to the release position and wherein when the threaded spindle (10) rotates the retaining element is transferred from the release position to the retaining position by way of a crown bounding the flank (10a).

3. Safety switch (1) according to one of claims 1 and 2, **characterised in that** the link (11) is movable against the spring force of a spring unit by means of the threaded spindle (10).

4. Safety switch (1) according to any one of claims 1 to 3, **characterised in that** the retaining element is constructed in the form of a latch (8).

5. Safety switch (1) according to any one of claims 1 to 4, **characterised in that** an RFID reader unit is provided as means for checking the locking position of the movable component of the separating protective device.

6. Safety switch (1) according to claim 5, **characterised in that** the RFID reader unit comprises a reader coil (17) integrated in the retaining element.

7. Safety switch (1) according to any one of claims 1 to 6, **characterised in that** this comprises means for position detection of the movable component of the separating protective device.

8. Safety switch (1) according to claim 7, **characterised in that** a further RFID reader unit is provided as means for position detection of the movable component of the separating protective device.

9. Safety switch (1) according to claim 8, **characterised in that** the further RFID reader unit comprises a further reader coil (19) arranged to be stationary.

10. Safety switch (1) according to any one of claims 7 to 9, **characterised in that** the or each reader coil (17, 19) is configured for reading signals of a transponder (18) integrated in a component of the separating protective device.

11. Safety switch (1) according to any one of claims 1 to 10, **characterised in that** the movable component of the separating protective device is formed by a door (6).

12. Safety switch (1) according to any one of claims 1 to 11, **characterised in that** this is integrated in a housing (2) which is constructed for installation in a profile member (5).

13. Safety switch (1) according to claim 12, **characterised in that** the profile member (5) is a component of a door frame.

## Claims

1. Safety switch (1) for a separating protective device, **characterised in that** this operates without actuator and comprises means for checking a locking position of a component of the separating protective device as well as a retaining unit with a retaining element, which can be brought into a retaining position in which this produces retention of a movable component of the separating protective device, wherein the safety switch comprises a screw drive, with a motor and a threaded spindle (10), by means of which the retaining element is movable between a retaining position and a release position, and wherein the screw drive is connected with the retaining element by way of a link (11), wherein the movement of the threaded spindle (10) is converted into a linear movement of the retaining element by the link (11).

2. Safety switch (1) according to claim 1, **characterised in that** the motor executes a rotational movement only in one rotational direction and that the threaded spindle (10) has only flank (10a), wherein the flank (10a) of the threaded spindle (10) predetermines the travel path of the retaining element from the retaining position to the release position and wherein when the threaded spindle (10) rotates the retaining element is transferred from the release position to the retaining position by way of a crown bounding the flank (10a).

3. Safety switch (1) according to one of claims 1 and 2, **characterised in that** the link (11) is movable against the spring force of a spring unit by means of the threaded spindle (10).

4. Safety switch (1) according to any one of claims 1 to 3, **characterised in that** the retaining element is constructed in the form of a latch (8).

5. Safety switch (1) according to any one of claims 1 to 4, **characterised in that** an RFID reader unit is provided as means for checking the locking position of the movable component of the separating protective device.

6. Safety switch (1) according to claim 5, **characterised in that** the RFID reader unit comprises a reader coil (17) integrated in the retaining element.

7. Safety switch (1) according to any one of claims 1 to 6, **characterised in that** this comprises means for position detection of the movable component of the separating protective device.

8. Safety switch (1) according to claim 7, **characterised in that** a further RFID reader unit is provided as means for position detection of the movable component of the separating protective device.

9. Safety switch (1) according to claim 8, **characterised in that** the further RFID reader unit comprises a further reader coil (19) arranged to be stationary.

10. Safety switch (1) according to any one of claims 7 to 9, **characterised in that** the or each reader coil (17, 19) is configured for reading signals of a transponder (18) integrated in a component of the separating protective device.

11. Safety switch (1) according to any one of claims 1 to 10, **characterised in that** the movable component of the separating protective device is formed by a door (6).

12. Safety switch (1) according to any one of claims 1 to 11, **characterised in that** this is integrated in a housing (2) which is constructed for installation in a profile member (5).

13. Safety switch (1) according to claim 12, **characterised in that** the profile member (5) is a component of a door frame.

## Revendications

1. Interrupteur de sécurité (1) destiné à un dispositif de protection séparatif, **caractérisé par le fait que** ledit interrupteur fonctionne sans actionneur et comprend des moyens affectés au contrôle d'un emplacement de verrouillage d'un composant du dispositif de protection séparatif, ainsi qu'une unité de maintien munie d'un élément de maintien pouvant être amené à un emplacement de retenue dans lequel il provoque une retenue d'un composant mobile dudit dispositif de protection séparatif, ledit interrupteur de sécurité comportant un mécanisme à filetage qui inclut un moteur et une broche filetée (10), et au moyen duquel l'élément de maintien peut être déplacé entre un emplacement de retenue et un emplacement de libération, ledit mécanisme à filetage étant relié audit élément de maintien par l'intermédiaire d'une pièce coulissante (11), le mouvement de ladite broche filetée (10) étant converti, par ladite pièce coulissante (11), en un mouvement linéaire dudit élément de maintien.

2. Interrupteur de sécurité (1) selon la revendication 1, **caractérisé par le fait que** le moteur accomplit un mouvement rotatoire uniquement dans une direction de rotation ; et **par le fait que** la broche filetée (10) comporte uniquement un flanc (10a), sachant que ledit flanc (10a) de la broche filetée (10) préétablit le trajet de déplacement de l'élément de maintien vers l'emplacement de libération à partir de l'emplacement de retenue et sachant que, lors d'une rotation de ladite broche filetée (10) au-delà d'un point sommital délimitant ledit flanc (10a), ledit élément de maintien est transféré dudit emplacement de libération audit emplacement de retenue.

3. Interrupteur de sécurité (1) selon l'une des revendications 1 ou 2, **caractérisé par le fait que** la pièce coulissante (11) peut être mue, au moyen de la broche filetée (10), en opposition à la force élastique d'une unité élastique.

4. Interrupteur de sécurité (1) selon l'une des revendications 1 à 3, **caractérisé par le fait que** l'élément de maintien est réalisé sous la forme d'un cliquet (8).

5. Interrupteur de sécurité (1) selon l'une des revendications 1 à 4, **caractérisé par le fait qu'**une unité de lecture RFID est prévue en tant que moyen dévolu au contrôle de l'emplacement de verrouillage du composant mobile du dispositif de protection séparatif.

6. Interrupteur de sécurité (1) selon la revendication 5, **caractérisé par le fait que** l'unité de lecture RFID est dotée d'une bobine de lecture (17) intégrée dans l'élément de maintien.

7. Interrupteur de sécurité (1) selon l'une des revendications 1 à 6, **caractérisé par le fait que** ce dernier est pourvu de moyens dévolus à la détection d'emplacements du composant mobile du dispositif de protection séparatif.

8. Interrupteur de sécurité (1) selon la revendication 7, **caractérisé par le fait qu'**une unité supplémentaire de lecture RFID est prévue en tant que moyen de détection d'emplacements du composant mobile du dispositif de protection séparatif.

9. Interrupteur de sécurité (1) selon la revendication 8, **caractérisé par le fait que** l'unité supplémentaire de lecture RFID comporte une bobine de lecture (19) supplémentaire, occupant une position fixe.

10. Interrupteur de sécurité (1) selon l'une des revendications 7 à 9, **caractérisé par le fait que** la, ou chaque bobine de lecture (17, 19) est conçue pour lire des signaux d'un transpondeur (18) intégré dans un composant du dispositif de protection séparatif.

11. Interrupteur de sécurité (1) selon l'une des revendications 1 à 10, **caractérisé par le fait que** le composant mobile du dispositif de protection séparatif est constitué d'une porte (6).

12. Interrupteur de sécurité (1) selon l'une des revendications 1 à 11, **caractérisé par le fait que** ce dernier est intégré dans un boîtier (2) conçu pour être incorporé dans un profilé (5).

13. Interrupteur de sécurité (1) selon la revendication 12, **caractérisé par le fait que** le profilé (5) fait partie intégrante d'un encadrement de porte.
